# EUROPÄISCHE PATENTANMELDUNG

(11) **EP 3 716 441 A1**
(43) Veröffentlichungstag der Anmeldung: **30.09.2020**
(21) Anmeldenummer: 19164976.3
(22) Anmeldetag: 25.03.2019
(51) Int. Cl.: H02J 9/06, H02J 7/00

(54) **MODULARES GERÄT ZUR STROMVERSORGUNG**

(71) Anmelder: VARTA Microbattery GmbH, 73479 Ellwangen Jagst (DE)
(72) Erfinder: Elmer, Martin, 73479 Ellwangen (DE); Ermer, Florian, 89520 Heidenheim (DE)
(74) Vertreter: Patentanwaltskanzlei Cartagena

(57) **Zusammenfassung**

Ein modulares Gerät (10) zur Stromversorgung verfügt über einen Energiespeicher (130) mit mindestens einem wiederaufladbaren Energiespeicherelement (132, 232), einen Netzanschluss (110) für eine Wechselspannungsquelle, einen ersten Ausgang (212) und einen zweiten Ausgang (112), an die jeweils externe elektrische Verbraucher anschließbar sind, und eine Schalteinrichtung (120), mittels der der Netzanschluss (110) elektrisch mit dem zweiten Ausgang (112) verbunden und von diesem getrennt werden kann, und der Energiespeicher (130) oder ein erstes Energiespeicherelement (232) des Energiespeichers (130) elektrisch mit dem zweiten Ausgang (112) verbunden und von diesem getrennt werden kann. Das Gerät (10) umfasst ein Basisteil (100) und ein daran koppelbares portables, vom Basisteil (100) abnehmbares Teil (200), wobei das portable Teil (200) den Energiespeicher (130) oder das erste Energiespeicherelement (232) des Energiespeichers (130) sowie den ersten Ausgang (212) und das Basisteil (100) den Netzanschluss (110), die Schalteinrichtung (120) oder einen Teil derselben und den zweiten Ausgang (112) umfassen. Das portable Teil (200) ist dazu ausgebildet, dass der Energiespeicher (130) oder das erste Energiespeicherelement (232) den ersten Ausgang (212) mit einer elektrischen Spannung versorgen kann. Der Energiespeicher (130) oder das erste Energiespeicherelement (232) des Energiespeichers (130) ist bei angekoppeltem portablem Teil (200) elektrisch mit der Schalteinrichtung (120) verbunden.

## Beschreibung

Die nachfolgend beschriebene Erfindung betrifft ein modulares Gerät zur Stromversorgung mit einem wiederaufladbaren Energiespeicher, einem Netzanschluss für eine Wechselspannungsquelle, einem ersten Ausgang und einem zweiten Ausgang, an die jeweils externe elektrische Verbraucher anschließbar sind, und mit einer Schalteinrichtung, mittels der der Netzanschluss elektrisch mit dem zweiten Ausgang verbunden und von diesem getrennt werden kann, und der Energiespeicher oder ein erstes Energiespeicherelement des Energiespeichers elektrisch mit dem zweiten Ausgang verbunden und von diesem getrennt werden kann.

Die Stromversorgung von Privathaushalten und Betrieben ist vielerorts nicht konstant, Ausfälle und Spannungsschwankungen im Stromnetz sind problematisch für sensible elektrische Verbraucher, die nahezu 100% ihrer Laufzeit zu Verfügung stehen müssen. Hierzu gehören beispielsweise Systeme aus der Kommunikations- und Informationstechnik wie Server und Router, die zur Datenspeicherung dienen oder den Zugang zum Internet sicherstellen.

Es gibt zahlreiche Arten von Stromversorgungsgeräten, welche die Verfügbarkeit von elektrischer Energie durch eine zusätzliche netzunabhängige Stromquelle sicherstellen. Diese Geräte werden von einer Wechselspannungsquelle, im Normalfall dem Stromnetz, gespeist und umfassen als netzunabhängige Stromquelle einen wiederaufladbaren Energiespeicher, der von der Wechselspannungsquelle geladen werden kann. Bei Störungen im Stromnetz können daran angeschlossene sensible elektronische Verbraucher mit Wechselstrom (AC) oder Gleichstrom (DC) übernehmen. Es wird also Energie aus dem wiederaufladbaren Energiespeicher bereitgestellt, wenn die Leistung der Wechselspannungsquelle in Folge einer Störung des Stromnetzes außerhalb definierter Grenzen liegt oder die Wechselspannungsquelle ganz ausfällt.

Man unterscheidet hierbei eine allgemeine Ersatzstromversorgung, kurz AEV, von einer unterbrechungsfreien Stromversorgung, kurz USV. Beide Gerätetypen bieten eine Stromversorgung für elektrische Verbraucher bei Ausfall des Stromnetzes. Im Gegensatz zu einer USV schaltet eine AEV langsamer zwischen der Wechselspannungsquelle und dem Energiespeicher um, so dass ein kurzzeitiger Spannungsabfall möglich ist.

Ein weiteres Beispiel für vom Stromnetz gespeiste Stromversorgungsgeräte sind netzgekoppelte Inselanlagen, also Solaranlagen mit einem Energiespeicher, die sowohl erzeugten Strom in das öffentliche Stromnetz einspeisen als auch Wechselstrom aus dem Stromnetz beziehen können. Externe Verbraucher können sowohl unmittelbar aus der Batterie gespeist werden als auch mit Strom aus dem Stromnetz.

Derartige Geräte sind in aller Regel zur stationären Verwendung vorgesehen. Meist sind sie fest installiert und daher nur zur lokalen Stromversorgung vorgesehen. Die eingesetzten Energiespeicher sind nicht für andere Anwendungen nutzbar. Die Geräte können in der Regel nicht flexibel an individuelle Leistungsbedürfnisse angepasst werden.

Der vorliegenden Erfindung lag die Aufgabe zugrunde, ein Stromversorgungsgerät bereitzustellen, das für diese Probleme eine Lösung bietet.

Zur Lösung dieser Aufgabe schlägt die Erfindung ein Gerät zur Stromversorgung mit den Merkmalen des Anspruch 1 vor.

Das erfindungsgemäße Gerät zur Stromversorgung zeichnet sich wie die aus dem Stand der Technik bekannten Stromversorgungsgeräte durch die folgenden Merkmale aus:
a. Das Gerät verfügt über einen wiederaufladbaren Energiespeicher mit mindesten einem Energiespeicherelement.
b. Das Gerät verfügt über einen Netzanschluss für eine Wechselspannungsquelle.
c. Das Gerät verfügt über einen ersten Ausgang und einen zweiten Ausgang, an die jeweils externe elektrische Verbraucher anschließbar sind.
d. das Gerät verfügt über eine Schalteinrichtung, mittels der
   - der Netzanschluss elektrisch mit dem zweiten Ausgang verbunden und von diesem getrennt werden kann, und
   - der Energiespeicher oder ein erstes Energiespeicherelement des Energiespeichers elektrisch mit dem zweiten Ausgang verbunden und von diesem getrennt werden kann.

Gegenüber den eingangs genannten Geräten zeichnet es sich dadurch aus, dass es modular aufgebaut ist und die folgenden Merkmale aufweist:
e. Das Gerät umfasst ein Basisteil und ein daran koppelbares portables, vom Basisteil abnehmbares Teil.
f. Das portable Teil umfasst den Energiespeicher oder das erste Energiespeicherelement des Energiespeichers sowie den ersten Ausgang, wobei das portable Teil dazu ausgebildet ist, dass der Energiespeicher oder das erste Energiespeicherelement den ersten Ausgang mit einer elektrischen Spannung versorgen kann.
g. Das Basisteil umfasst den Netzanschluss, die Schalteinrichtung oder einen Teil derselben und den zweiten Ausgang.
h. Der Energiespeicher oder das erste Energiespeicherelement des Energiespeichers ist bei angekoppeltem portablem Teil elektrisch mit der Schalteinrichtung verbunden.

Das Gerät weist also die gleichen oder ähnliche Komponenten auf wie eine klassische USV oder eine Inselanlage, es ist also grundsätzlich dazu in der Lage, als USV oder Inselanlage betrieben zu werden. Allerdings sind die Komponenten in unabhängig voneinander nutzbaren Modulen, dem Basisteil und dem portablen Teil, angeordnet, was eine flexiblere Nutzung der Komponenten ermöglicht. So umfasst beispielsweise der portable Teil stets den Energiespeicher oder das erste Energiespeicherelement des Energiespeichers und taugt damit grundsätzlich völlig unabhängig vom Basisteil zur Stromversorgung externer elektrischer Verbraucher. Es kann vom Basisteil abgekoppelt werden und ist auch für nicht stationäre Anwendungen tauglich. Das Basisteil kann wiederum am zweiten Ausgang hängende Verbraucher grundsätzlich auch mit Strom versorgen wenn das portable Teil abgekoppelt ist. Darüber hinaus ist es möglich, das Gerät beispielsweise durch Austausch des portablen Teils an individuelle Leistungsbedürfnisse anzupassen, also beispielsweise mit einem leistungsfähigeren Energiespeicher auszustatten.

Die vom Basisteil umfassten Komponenten sind für den stationären Betrieb - mit und ohne das portable Teil - in der Regel zwingend erforderlich. So sichern der Netzanschluss und die Schalteinrichtung bzw. der Teil derselben die Versorgung des zweiten Ausgang mit Strom, wenn das portable Teil abgekoppelt ist.

### Bevorzugte Ausgestaltungen von Basisteil und portablem Teil

Das Basisteil und das portable Teil sind bevorzugt jeweils von einem Gehäuse umschlossen, das aus Kunststoff und/oder Metall ausgebildet ist und gegebenenfalls Durchbrechungen, etwa für den Netzanschluss und den zweiten Ausgang, aufweist. Bevorzugt ist das Gehäuse derart ausgestaltet, dass eine Abschirmung gegebenenfalls enthaltener elektronischer Komponenten zum Schutz der Umgebung gewährleistet ist. Darüber hinaus kann es für die Kühlung enthaltener Komponenten ausgebildet sein, also beispielsweise Kühlschlitze oder Kühlrippen aufweisen.

Das Basisteil und das portable Teil weisen bevorzugt jeweils einen Kopplungsbereich auf, die bei Kopplung des portablen Teils mit dem Basisteil unmittelbar miteinander in Kontakt stehen. Die Kopplung ist bevorzugt eine mechanische Kopplung, gegebenenfalls umfasst sie eine mechanische Verriegelung. Hierzu kann der Kopplungsbereich des Basisteils beispielsweise als Aufnahme ausgebildet sein, die in Form und Größe zu dem portablen Teil oder dem Kopplungsbereich des portablen Teils korrespondiert und in der das portable Teil oder dessen Kopplungsbereich angeordnet, insbesondere mechanisch fixiert werden kann.

Um die elektrische Verbindung zwischen dem Energiespeicher oder dem ersten Energiespeicherelement des Energiespeichers und der Schalteinrichtung in angekoppeltem Zustand zu gewährleisten, weisen das portable Teil und das Basisteil bevorzugt eine jeweils komplementär ausgebildete Kopplungseinrichtung auf. Diese ermöglichen eine lösbare elektrische Kopplung zwischen dem portablen Teil und dem Basisteil. Im einfachsten Fall kann es sich bei den Kopplungseinrichtungen jeweils um einen elektrischen Kontakt handeln, die in den Kopplungsbereichen von Basisteil und portablem Teil angeordnet sind. Einer der Kontakte kann beispielsweise als Stecker und der andere als dazu korrespondierende Buchse ausgebildet sein.

In einer besonders bevorzugten Ausführungsform sind das Basisteil und das portable Teil derart ausgebildet, dass die elektrische und die mechanische Kopplung zwischen dem portablen Teil und dem Basisteil in einem Schritt hergestellt und getrennt werden kann. Wenn der Kopplungsbereich des Basisteils als Aufnahme ausgebildet ist, können hierzu beispielsweise die erwähnten elektrischen Kontakte so in den Kontaktbereichen angeordnet werden, dass sie unmittelbar miteinander in Kontakt stehen, wenn das portable Teil in der Aufnahme fixiert ist.

Das Basisteil ist in aller Regel für den stationären Betrieb vorgesehen und daher bevorzugt fest in dafür vorgesehenen Vorrichtungen oder Räumlichkeiten fixiert.

Das portable Teil ist bevorzugt derart dimensioniert, dass es sich ohne große Mühe von einer Person tragen lässt. In aller Regel wiegt es nicht mehr als 15 kg.

### Bevorzugte Ausgestaltungen der Schalteinrichtung / USV-Funktionalität

Eine USV-Funktionalität des erfindungsgemäßen Geräts kann durch die Schalteinrichtung gewährleistet werden.

Hierzu kann die Schalteinrichtung in einer ersten bevorzugten Variante als USV-Schaltelement einen Wechselschalter mit einem ersten Schaltereingang, der mit dem Netzanschluss verbunden ist, und einem zweiten Schaltereingang, der bei angekoppeltem portablem Teil mit dem Energiespeicher verbunden ist, umfassen. Am Ausgang des Wechselschalters hängt dann der zweite Ausgang.

In einer zweiten bevorzugten Variante kann die Schalteinrichtung als USV-Schaltelement zwei unabhängig voneinander schaltbare Schalter umfassen, von denen der eine zwischen dem Netzanschluss und dem zweiten Ausgang und der zweite zwischen dem Energiespeicher und dem zweiten Ausgang angeordnet ist.

Der Wechselschalter kann beispielsweise als zweipoliger Wechselschalter (DPDT) oder zweipoliger Wechselschalter mit Mittelstellung (DPCO) ausgebildet sein. Hierdurch kann zwischen dem ersten und zweiten Schalteingang und dem zweiten Ausgang umgeschaltet werden. Durch eine Mittelstellung ist es möglich, dass keiner der beiden Schalteingänge mit dem zweiten Ausgang verbunden ist. Im Falle von unabhängig voneinander schaltbaren Schaltern besteht die Möglichkeit, dass es sich jeweils um einpolige Einschalter (SPST, SPDT) bzw. Ein/Aus/Ein- Schalter mit einer stabilen Mittelstellung (SPCO, SPTT) handelt. Durch eine kreuzweise Ansteuerung der einzelnen Schalter kann unterbrechungsfrei zwischen den beiden Anschlüssen umgeschaltet werden.

Die erste der beiden Varianten ist in der Regel die bevorzugte. Mit dem Wechselschalter kann der Wechsel von der ersten in die zweite Schaltstellung in einem Schritt erfolgen, bei Verwendung mehrerer Schalter benötigt die Schalteinrichtung eine Steuereinheit, welche die Schalter synchronisiert ansteuert.

Bei beiden Varianten ist die Schalteinrichtung bevorzugt so konfiguriert, dass in einer ersten Schaltstellung der Netzanschluss mit dem zweiten Ausgang verbunden ist. Bei Unterschreitung eines Leistungswerts, beispielsweise einer elektrischen Spannung, oder bei Komplettausfall des vom Netzanschluss gelieferten Stroms schaltet die Schalteinrichtung in eine zweite Schaltstellung, in welcher der Energiespeicher mit dem zweiten Ausgang verbunden ist. Eine Umschaltung zurück in die erste Schaltstellung kann erfolgen, wenn die Störung des Netzanschlusses behoben ist.

Wenn die Schalteinrichtung sich aus mehreren Teilen zusammensetzt, beispielsweise also die zwei unabhängig voneinander schaltbare Schalter umfasst, kann es bevorzugt sein, dass sich ein Teil der Schalteinrichtung, etwa einer der zwei Schalter, in dem Basisteil befindet und ein weiteres Teil der Schalteinrichtung, etwa der zweite der zwei Schalter, in dem portablen Teil angeordnet ist. Bevorzugt ist in der Regel, dass sich alle Teile der Schalteinrichtung im Basisteil befinden.

### Bevorzugte Ausgestaltungen der Schalteinrichtung / Energieoptimierter Betrieb

Die Schalteinrichtung kann auch derart ausgebildet und/oder gesteuert sein, dass sie den Netzanschluss mit dem ersten und/oder zweiten Ausgang ausschließlich dann verbindet, wenn mindestens ein Leistungswert des Energiespeichers und/oder ein Leistungswert des mindestens einen externen elektrischen Verbrauchers einen vordefinierten Grenzwert unter- oder überschreitet.

Während klassische USV-Geräte angeschlossene elektrische Verbraucher im Normalbetrieb mit Netzstrom versorgen und nur im Störfall auf eine Versorgung aus einem Energiespeicher umschalten, liegt die Priorität bei dieser Ausführungsform genau umgekehrt auf der Nutzung von Energie aus dem Energiespeicher.

### Bevorzugte Ausgestaltungen der Schalteinrichtung / Automatische Umschaltung bei Abkopplung des portablen Teils

Die Schalteinrichtung ist derart konzipiert, dass bei Abkopplung des portablen Teils der Netzanschluss mit dem zweiten Ausgang verbunden werden kann. An das Basisteil angeschlossene Verbraucher können also ohne das portable Teil direkt und ohne eine Absicherung durch den Energiespeicher betrieben werden. Im gekoppelten Zustand können sich die Funktionen des portablen Teils und des Basisteils ergänzen. Beispielsweise kann die Schalteinrichtung den Energiespeicher oder das erste Energiespeicherelement im portablen Teil mit dem zweiten Ausgang verbinden, so dass das Gerät die beschriebene USV-Funktionalität aufweist.

Besonders bevorzugt ist das Gerät dazu ausgebildet, dass bei Abkopplung des portablen Teils der Netzanschluss automatisch mit dem zweiten Ausgang verbunden wird.

Es ist bevorzugt, dass sich das erfindungsgemäße Gerät durch mindestens eines der vier unmittelbar folgenden zusätzlichen a. bis d. Merkmale auszeichnet:
a. Das Basisteil umfasst ein zweites Energiespeicherelement des Energiespeichers.
b. Das Basisteil ist derart ausgebildet, dass das zweite Energiespeicherelement den zweiten Ausgang und/oder einen dritten Ausgang im Basisteil mit einer elektrischen Spannung versorgen kann.
c. Die Schalteinrichtung ist dazu ausgebildet, eine elektrische Verbindung zwischen dem zweiten Energiespeicherelement und dem zweiten Ausgang herzustellen oder zu trennen.
d. Der Netzanschluss ist mit dem zweiten Energiespeicherelement elektrisch verbunden, so dass dieses von der Wechselspannungsquelle geladen werden kann.

Bevorzugt sind die unmittelbar vorstehenden Merkmale a. bis c., bevorzugt alle Merkmale a. bis d., in Kombination miteinander realisiert.

In diesen Ausführungsformen weist das Gerät eine USV-Funktionalität auch dann auf, wenn das portable Teil nicht mit dem Basisteil gekoppelt ist.

Grundsätzlich kann der Energiespeicher genau ein Energiespeicherelement umfassen, das dann als Energiespeicher im portablen Teil angeordnet ist. Mit dem zweiten Energiespeicherelement ist der Energiespeicher mindestens zweiteilig aufgebaut, er umfasst dann das erste Energiespeicherelement im portablen Teil und das zweite Energiespeicherelement im Basisteil. Bevorzugt ist das Gerät derart ausgebildet, dass sich bei angekoppeltem portablem Teil die Spannungen und/oder die Kapazitäten der Energiespeicherelemente addieren.

Ganz grundsätzlich können die Energiespeicherelemente Einzelzellen sein, bevorzugt umfasst allerdings jedes der Energiespeicherelemente zwei oder mehr Zellen, die parallel und/oder seriell miteinander verschaltet sind.

Es ist bevorzugt, dass der Energiespeicher insgesamt eine Spannung im Bereich von 12 V bis 60 Volt Gleichspannung liefert.

Die Nennkapazität des oder der vom Energiespeicher umfassten Energiespeicherelemente beträgt in der Regel maximal 5 kWh. Bevorzugt liegt die Nennkapazität eines einzelnen Energiespeicherelements im Bereich von 200 Wh bis 2000 Wh, besonders bevorzugt im Bereich von 500 Wh bis 1000 Wh, abhängig von Typ und Größe.

In der Europäischen Union sind Herstellerangaben zu Angaben betreffend die Nennkapazitäten von sekundären elektrochemischen Energiespeichern streng reglementiert. So haben etwa Angaben zur Nennkapazität von sekundären Nickel-Cadmium-Batterien auf Messungen gemäß den Normen IEC/EN 61951-1 und IEC/EN 60622, Angaben zur Nennkapazität von sekundären Nickel-Metallhydrid-Batterien auf Messungen gemäß der Norm IEC/EN 61951-2, Angaben zur Nennkapazität von sekundären Lithium-Batterien auf Messungen gemäß der Norm IEC/EN 61960 und Angaben zur Nennkapazität von sekundären Blei-Säure-Batterien auf Messungen gemäß der Norm IEC/EN 61056-1 zu basieren. Jegliche Angaben zu Nennkapazitäten in der vorliegenden Anmeldung basieren bevorzugt ebenfalls auf diesen Normen.

Es ist bevorzugt, dass sich das erfindungsgemäße Gerät durch mindestens eines der fünf unmittelbar folgenden zusätzlichen a. bis e. Merkmale auszeichnet:
a. Das Gerät umfasst einen Ladeanschluss für eine zusätzliche externe Spannungsquelle.
b. Das Basisteil umfasst den Ladeanschluss.
c. Der Ladeanschluss ist mit dem zweiten Energiespeicherelement elektrisch verbunden, so dass dieses von der zusätzlichen externen Spannungsquelle geladen werden kann.
d. Das portable Teil umfasst den Ladeanschluss.
e. Der Ladeanschluss ist mit dem ersten Energiespeicherelement elektrisch verbunden, so dass dieses von der zusätzlichen externen Spannungsquelle geladen werden kann.

In besonders bevorzugten Ausführungsformen sind die unmittelbar vorstehenden Merkmale a. bis c. oder die Merkmale a., d. und e. miteinander kombiniert.

Es kann also durchaus bevorzugt sein, dass sowohl das Basisteil als auch das portable Teil einen Ladeanschluss umfassen.

In einer weiteren bevorzugten Ausführungsform sind die Merkmale a., b. und e. in Kombination miteinander realisiert. Das bedeutet, dass das erste Energiespeicherelement im portablen Teil von der zusätzlichen externen Spannungsquelle über das Basisteil geladen werden kann.

In einer weiteren bevorzugten Ausführungsform sind die Merkmale a., b., c. und e. in Kombination miteinander realisiert. Das bedeutet, dass das erste Energiespeicherelement im portablen Teil und das zweite Energiespeicherelement im Basisteil von der zusätzlichen externen Spannungsquelle geladen werden können.

Bei der zusätzlichen externen Spannungsquelle kann es sich sowohl um eine Gleichspannungsquelle als auch um eine zusätzliche Wechselspannungsquelle handeln, beispielsweise um eine Photovoltaik- oder Windkraftanlage, insbesondere um eine portable Photovoltaik- oder Windkraftanlage. In der Regel beträgt die Peak Nennleistung der anschließbaren Anlagen maximal 0,4 kW. Beispielsweise kann der Ladeanschluss eine zweipolige 12 Volt oder 24 Volt oder 36 Volt Buchse sein. Sehr kleine Anlagen können an den Ladeanschluss auch mittels Power over Ethernet (PoE) angeschlossen werden. Bei dem Ladeanschluss kann es sich entsprechend auch um eine Buchse für einen 8P8C-Stecker handeln.

Es ist auch möglich, dass das portable Teil neben dem Ladeanschluss oder alternativ zu diesem einen eigenen Netzanschluss für eine Wechselspannungsquelle aufweist, wie ihn das Basisteil zwingend umfasst.

Ein solcher Netzanschluss ist bevorzugt für einen Anschluss einer Wechselspannungsquelle mit einer Spannung im Bereich von 90 V bis 1000 V dimensioniert, die beispielsweise von einem Stromversorger bereitgestellt wird. Bei der Wechselspannungsquelle handelt es sich bevorzugt um ein Wechselstrom-Niederspannungsnetz mit einer Spannung im Bereich von 220-240 Volt. Beispielsweise kann der Netzanschluss als zwei- oder dreiadrige Kabelkupplung gemäß IEC 60320-C13 ausgebildet sein.

Bevorzugt ist der Energiespeicher ein wiederaufladbarer Speicher für elektrische Energie auf elektrochemischer Basis.

Es ist bevorzugt, dass sich das erfindungsgemäße Gerät durch mindestens eines der drei unmittelbar folgenden zusätzlichen Merkmale a. bis c. auszeichnet:
a. Das erste Energiespeicherelement umfasst als sekundäre Zelle mindestens eine Akkumulatorzelle vom Typ Lithium-Ionen-Akkumulator.
b. Das zweite Energiespeicherelement umfasst als sekundäre Zelle mindestens eine Akkumulatorzelle vom Typ Blei-Akkumulator.
c. Das erste Energiespeicherelement umfasst als sekundäre Zelle mindestens eine Akkumulatorzelle vom Typ Lithium-Ionen-Akkumulator und das zweite Energiespeicherelement umfasst als sekundäre Zelle mindestens eine Akkumulatorzelle vom Typ Blei-Akkumulator.

Bevorzugt sind die einzelnen Energiespeicherelemente hinsichtlich des zugrunde liegenden chemischen Redoxsystems als auch ihrer elektrischen Werte oder ihrer geometrischen bzw. konstruktiven Merkmale an den jeweiligen Bedarf angepasst.

In einer Ausführungsform mit einem ersten Energiespeicherelement im portablen Teil und einem zweiten Energiespeicherelement im Basisteil kann es bevorzugt sein, dass es sich bei dem ersten und dem zweiten Energiespeicherelement um unterschiedliche Typen von Energiespeicherelementen handelt. Es ist beispielsweise denkbar, dass im portablen Teil ein Energiespeicherelement verbaut ist, welches sich besonders für wiederholtes Be- und Entladen eignet, während das Energiespeicherelement im Basisteil besonders gut für ein Verweilen in einem geladenen Zustand geeignet ist, da dieses nur im Störungsfall verwendet werden muss.

Es ist bevorzugt, dass sich das erfindungsgemäße Gerät durch mindestens eines der drei unmittelbar folgenden zusätzlichen Merkmale auszeichnet:
a. Das Gerät ist derart ausgebildet, dass das erste und das zweite Energiespeicherelement gleichzeitig von der Wechselspannungsquelle geladen werden.
b. Das Gerät ist derart ausgebildet, dass das erste und das zweite Energiespeicherelement gleichzeitig von der zusätzlichen externen Spannungsquelle geladen werden können.
c. Das Gerät ist derart ausgebildet, dass das erste und das zweite Energiespeicherelement gleichzeitig entladen werden können.

In besonders bevorzugten Ausführungsformen sind die unmittelbar vorstehenden Merkmale a. bis c. in Kombination miteinander realisiert.

Zum gleichzeitigen Laden des ersten und zweiten Energiespeicherelements wird ein Laderegler benötigt, der bevorzugt im Basisteil angeordnet ist. Der Laderegler wird zwischen die jeweilige Spannungsquelle und die Energiespeicherelemente geschaltet. Es kann aber auch bevorzugt sein, dass lediglich das portable Teil über einen Laderegler für den Energiespeicher oder das erste Energiespeicherelement verfügt. In einer weiteren möglichen Ausführungsform ist dem ersten und dem zweiten Energiespeicherelement jeweils ein separater Laderegler zugeordnet, über die die Energiespeicherelemente jeweils geladen werden können. Der Laderegler für das erste Energiespeicherelement ist dann bevorzugt im portablen Teil, der Laderegler für das zweite Energiespeicherelement bevorzugt im Basisteil angeordnet.

In Ausführungsformen, in denen sich das erste und das zweite Energiespeicherelement vom Typ her unterscheiden, kann es erforderlich sein, dass der Ladungsregler unterschiedliche Spannungen bereitstellen muss, um die Energiespeicherelemente laden zu können. Alternativ können natürlich auch unterschiedliche Laderegler verwendet werden.

Für das gleichzeitige Laden und Entladen des ersten und des zweiten Energiespeicherelements ist es zweckmäßig, dass das erste und das zweite Energiespeicherelement bei angekoppeltem portablem Teil parallel oder seriell miteinander verschaltet sind. Bei serieller Verschaltung addieren sich ihre Spannungen, bei parallelerVerschaltung können größere Ströme bereitgestellt werden.

In bevorzugten Ausführungsformen umfasst das Gerät ein Mittel, mit dem einen Ladungsausgleich zwischen den im Basisteil und den im portablen Teil angeordneten Energiespeicherelementen geregelt werden kann. Wenn das portable Teil unabhängig von dem Basisteil genutzt wurde, weisen im Basisteil und im portablen Teil angeordnete Energiespeicherelemente nämlich in aller Regel unterschiedliche Ladezustände auf.

Im einfachsten Fall kann es sich bei dem Mittel, mit dem einen Ladungsausgleich geregelt wird, um einen Widerstand parallel zur einem der Energiespeicherelemente handeln, wodurch die Spannung dieses Energiespeicherelements auf eine bestimmte Ladeschlussspannung begrenzt wird. Hierdurch wird ein passives Ausbalancieren von Energiespeicherelementen ermöglicht.

Es besteht weiterhin die Möglichkeit, dass beispielsweise Trenndioden zischen den im Basisteil und den im portablen Teil angeordneten Energiespeicherelementen angeordnet sind. Diese begrenzen potentielle Ausgleichströme auf eine Richtung, in die ausgeglichen werden kann. Beispielsweise nur von dem Basisteil angeordneten Energiespeicherelementen in Richtung der im portablen Teil angeordneten Energiespeicherelementen.

Das Mittel, mit dem einen Ladungsausgleich zwischen den im Basisteil und den im portablen Teil angeordneten Energiespeicherelementen geregelt werden kann, kann auch einen aktiven Ausgleichsregler (eine elektronische Schaltung, die üblicherweise Teil eines Batteriemanagementsystems ist, welche eine gleichmäßige elektrische Ladungsverteilung ähnlich aufgebauter, aber durch Fertigungstoleranzen und Alterung in elektrischer Hinsicht leicht unterschiedlichen Energiespeicherelementen innerhalb eines Energiespeichers gewährleistet) umfassen. Dieser aktive Ausgleichsregler kann beispielsweise durch eine Balancerschaltung einen Ladungstransfer von Energiespeicherelementen untereinander realisieren und Energie von Energiespeicherelementen mit höherer Ladung auf Energiespeicherelementen mit niedrigerer Ladung übertragen oder diesen Ladungstransfer verhindern.

In einigen bevorzugten Ausführungsformen können die Energiespeicherelemente des Energiespeichers dynamisch miteinander verschaltet werden. Zu diesem Zweck kann die Schalteinrichtung dazu ausgebildet sein, die Energiespeicherelemente nach Bedarf seriell oder parallel zueinander zu schalten.

Es ist bevorzugt, dass sich das erfindungsgemäße Gerät durch mindestens eines derfünf unmittelbar folgenden zusätzlichen Merkmale a. bis e. auszeichnet:
a. Das Gerät umfasst eine Steuerungs- und/oder Überwachungseinrichtung.
b. Die Steuerungs- und/oder Überwachungseinrichtung ist dazu ausgelegt, mindestens einen Leistungswert des Netzanschlusses zu erfassen.
c. Die Steuerungs- und/oder Überwachungseinrichtung ist dazu ausgelegt, einen Ladezustand und/oder Leistungswert des Energiespeichers und/oder einzelner Energiespeicherelemente zu erfassen.
d. Die Steuerungs- und/oder Überwachungseinrichtung ist mit der Schalteinrichtung verbunden und dazu ausgelegt, die Schalteinrichtung oder einzelne Schaltelemente der Schalteinrichtung in unterschiedliche Schaltzustände zu überführen.
e. Die Steuerungs- und/oder Überwachungseinrichtung ist dazu ausgelegt, zu erfassen, ob eine elektrische und/oder mechanische Kopplung zwischen dem Basisteil und dem portablen Teil besteht.

In besonders bevorzugten Ausführungsformen sind die unmittelbar vorstehenden Merkmale a. bis d., insbesondere die Merkmale a. bis e., miteinander kombiniert.

Bei einer Ausführungsform, bei der das portable Teil über den eigenen Netzanschluss verfügt, ist es bevorzugt, dass die Steuerungs- und/oder Überwachungseinrichtung dazu ausgelegt ist, auch diesen auf Abweichungen von Leistungswerten hin zu überwachen.

Weiterhin kann es bevorzugt zu sein, dass die Steuerungs- und/oder Überwachungseinrichtung dazu ausgebildet ist,
- mindestens einen Leistungswert des oder der Ladeanschlüsse zu erfassen, und/oder
- mindestens einen Leistungswert eines elektrischen Verbrauchers am ersten Ausgang und/oder am zweiten Ausgang, gegebenenfalls auch an weiteren Ausgängen, zu erfassen, und/oder
- Schaltzustände der Schalteinrichtung oder einzelner Schaltelemente der Schalteinrichtung zu erfassen, beispielsweise mit Hilfe von Sensoren, und/oder
- die Schalteinrichtung oder einzelne Schaltelemente der Schalteinrichtung in unterschiedliche Schaltzustände zu überführen, beispielsweise mit Hilfe von Aktoren und/oder Signalgebern.

Die Steuerungs- und/oder Überwachungseinrichtung kann mehrere Komponenten umfassen, beispielsweise kann sie zur Erfassung eines Leistungswerts ein Spannungsmessgerät oder zur Verarbeitung von Daten ein hochintegrierten elektronisches Bauteil (engl.: integrated circuit, kurz IC) wie einen Mikrocontroller umfassen.

Der Mikrocontroller kann beispielsweise mit der Schalteinrichtung oder einzelnen Schaltelementen der Schalteinrichtung in Verbindung stehen und deren Schaltverhalten in Abhängigkeit eines ermittelten Leistungswerts steuern. Hierbei kann es sich insbesondere um einen Leistungswert aus der Gruppe mit Temperatur, Spannung, Ladezustand, Ladestrom handeln.

Es besteht die Möglichkeit, dass die Steuerungs- und/oder Überwachungseinrichtung zusammen mit der Schalteinrichtung oder einzelnen Schaltelementen der Schalteinrichtung Bestandteile eines hochintegrierten elektronischen Bauteils (engl.: integrated circuit, kurz IC) sind oder dass die Steuerungs- und/oder Überwachungseinrichtung in die Schalteinrichtung integriert ist oder dass die Schalteinrichtung oder einzelne Schaltelemente der Schalteinrichtung in die Steuerungs- und/oder Überwachungseinrichtung integriert ist.

Die Steuerungs- und/oder Überwachungseinrichtung kann mehrere Untereinheiten umfassen, beispielsweise können eine erste Untereinheit der Steuerungs- und Überwachungseinrichtung im Basisteil und eine zweite Untereinheit der Steuerungs- und Überwachungseinrichtung im portablen Teil angeordnet sein.

Es ist bevorzugt, dass sich das erfindungsgemäße Gerät durch mindestens eines der zwei unmittelbar folgenden zusätzlichen Merkmale, in einigen bevorzugten Ausführungsformen durch beide Merkmale, auszeichnet:
a. Das Basisteil verfügt über eine Anzeige- und/oder Bedieneinheit.
b. Das portable Teil verfügt über eine Anzeige- und/oder Bedieneinheit.

Im einfachsten Fall kann eine solche Anzeige- und/oder Bedieneinheit mit einer Mehrzahl von LEDs ausgebildet sein. Diese können über verschiedene Betriebszustände des Geräts informieren, beispielsweise bei einem Gerät mit USV-Funktionalität ob eine Störung des Netzanschlusses vorliegt und wie der Ladezustand des Energiespeichers ist. Es ist bevorzugt, dass die Anzeige- und/oder Bedieneinheit ein Display umfasst, auf dem diese Betriebszustände und/oder Leistungswerte des Energiespeichers und/oder Zustände der Schalteinrichtung und/oder der Steuerungs- und/oder Überwachungseinrichtung angezeigt werden können. Das Display kann beispielsweise ein TFT- oder LCD-Display sein.

Bevorzugt lassen sich über die Anzeige- und/oder Bedieneinheit unterschiedliche Zustände der Schalteinrichtung manuell aktivieren und deaktivieren.

Es ist bevorzugt, dass sich das erfindungsgemäße Gerät durch mindestens eines der fünf unmittelbar folgenden zusätzlichen Merkmale a. bis e. auszeichnet:
a. Das Gerät umfasst eine Datenübertragungseinheit, die mit der Steuerungs- und/oder Überwachungseinrichtung verbunden ist.
b. Das Gerät umfasst einen Dateneingang, der für eine nicht kabellose Übertragung von Daten und/oder Schaltsignalen von und/oder zu der Datenübertragungseinheit vorgesehen ist.
c. Die Datenübertragungseinheit ist dazu ausgebildet, Daten und/oder Schaltsignale kabellos von einem externen Sender zu empfangen und/oder kabellos an einen externen Empfänger zu übertragen.
d. Die Datenübertragungseinheit ist dazu ausgebildet, die von dem externen Sender empfangenen Daten und/oder Schaltsignale an die Steuerungs- und/oder Überwachungseinrichtung weiterzuleiten.
e. Die Datenübertragungseinheit ist dazu ausgebildet, Daten über Schaltzustände und/oder Leistungswerte des Energiespeichers und/oder Leistungswerte des mindestens einen externen elektrischen Verbrauchers an den externen Empfänger weiterzuleiten.

In besonders bevorzugten Ausführungsformen sind alle unmittelbar vorstehenden Merkmale a. bis e. in Kombination miteinander realisiert.

Die Datenübertragungseinheit kann dazu ausgebildet sein, die Daten und/oder Signale über ein kabelgebundenes Datennetz (LAN) oder mit Hilfe modulierter elektromagnetischer Wellen im Radiofrequenzbereich drahtlos zu übertragen. So kann es sich bei der Datenübertragungseinheit beispielsweise um einen Bluetooth-, WLAN-, Zigbee-, GSM-, CDMA-, UMTS- oder LTE-Chip handeln. Der externe Empfänger und/oder der externe Sender kann beispielsweise ein Datenverarbeitungsgerät wie ein Computer oder Mobiltelefon sein. Die Datenübertragungseinheit kann als eine separate Komponente vorliegen oder auch integriert, beispielsweise in die Steuerungs- und/oder Überwachungseinheit.

Es ist bevorzugt, dass sich das erfindungsgemäße Gerät durch mindestens eines der zwei unmittelbar folgenden zusätzlichen Merkmale a. und b. auszeichnet:
a. Das Gerät umfasst ein Detektionsmittel, um ein mechanisches An- und/oder Abkoppeln des portablen Teils zu erfassen und an die Steuerungs- und/oder Überwachungseinrichtung zu melden.
b. Das Gerät umfasst ein mechanisches Verriegelungsmittel zum Befestigen des portablen Teils an dem Basisteil.

Da bei einer Abkopplung des portablen Teils im portablen Teil angeordnete Energiespeicherelemente nicht mehr für eine Stromversorgung des zweiten Ausgangs zur Verfügung stehen, muss für eine unterbrechungsfreie Stromversorgung die Schalteinrichtung gegebenenfalls zurück auf eine Versorgung über den Netzstrom schalten. Das Detektionsmittel kann die oben erwähnte automatische Verbindung des zweiten Ausgangs mit dem Netzanschluss unterstützen.

Das Detektionsmittel ist bevorzugt dazu ausgebildet, den Status des Geräts zu überwachen und eine Statusänderung, nämlich das An- oder Abkoppeln des portablen Teils, an die Steuerungs- und/oder Überwachungseinrichtung zu melden.

Im einfachsten Fall erfasst das Detektionsmittel den Spannungsabfall, der bei der Abkopplung aus der elektrischen Abtrennung des oder der im portablen Teil angeordneten Energiespeicherelemente resultiert. Das Detektionsmittel ist in diesem Fall bevorzugt Teil der oben beschriebenen Steuerungs- und/oder Überwachungseinrichtung.

In alternativen Ausführungsformen kann das Detektionsmittel in dem Kopplungsbereich angeordnet sein, in dem im gekoppelten Zustand das portable Teil und das Basisteil unmittelbar miteinander in Kontakt stehen.

Werden beispielsweise währen einer Abkopplung des portablen Teils Wechselstromverbraucher über einen Wechselrichter mit Strom aus dem ersten Energiespeicherelement des Energiespeichers gespeist, muss die Steuerungs- und/oder Überwachungseinrichtung bei einer Umschaltung auf Netzstrom in aller Regel eine Synchronisierung der Wechselspannungsquellen vornehmen. Bei einem Wechsel einer Spannungsquelle müssen Parameter aus der Gruppe mit Spannung, Frequenz und Phasenlage aneinander angepasst werden.

Die Ausgänge des Geräts können zum Anschluss elektrischer Verbraucher genutzt werden, wobei es sich hierbei um Wechselstrom (AC) und/oder Gleichstrom (DC)-Verbraucher handeln kann. Es kann bevorzugt sein, dass das das Gerät mindestens einen Wechselrichter (auch Inverter) umfasst, der Gleichspannung aus dem mindestens einen Energiespeicherelement in einen Wechselstrom umwandelt. Für eine Ausführungsform, bei der das Gerät für DC-Verbraucher ausgebildet ist, kann es bevorzugt sein, dass das Gerät mindestens einen Gleichspannungswandler, auch DC-DC-Wandler genannt, umfasst, der eine vom Energiespeicherelement zugeführte Gleichspannung in eine Gleichspannung mit höherem, niedrigerem oder invertiertem Spannungsniveau umwandelt.

In bevorzugten Ausführungsformen zeichnet sich das erfindungsgemäße Gerät durch mindestens eines der zwei unmittelbar folgenden zusätzlichen Merkmale a. und b. aus:
a. Mindestens ein Ausgang des Geräts ist ein Wechselspannungsausgang, an den externe Wechselspannungsverbraucher anschließbar sind.
b. Das Gerät umfasst mindestens einen Wechselrichter, der zwischen den Energiespeicher und den Wechselspannungsausgang geschaltet ist.

Besonders bevorzugt ist der zweite Ausgang ein Wechselspannungsausgang.

In bevorzugten Ausführungsformen zeichnet sich das erfindungsgemäße Gerät durch mindestens eines der drei unmittelbar folgenden zusätzlichen Merkmale a. bis c. aus:
a. Mindestens ein Ausgang des Geräts ist ein Gleichspannungsausgang, an den externe Gleichspannungsverbraucher anschließbar sind.
b. Das Gerät verfügt über einen Gleichspannungswandler, der zwischen den Energiespeicher und den Gleichspannungsausgang geschaltet ist.
c. Das portable Teil umfasst den Gleichspannungsausgang.

In bevorzugten Ausführungsformen sind die unmittelbar vorstehenden Merkmale a. und c. oder a. bis c. in Kombination miteinander realisiert.

In einer bevorzugten Ausführungsform können der Energiespeicher oder das erste Energiespeicherelement des Energiespeichers im portablen Teil über den ersten Ausgang auch geladen werden. Der erste Ausgang ist also grundsätzlich als Eingang konfigurierbar.

Die modulare Ausgestaltung des erfindungsgemäßen Geräts ermöglicht insbesondere eine flexible Nutzung des Energiespeichers oder des ersten Energiespeicherelements des Energiespeichers im portablen Teil. Das portable Teil ist für diverse mobile Zwecke nutzbar. Beispielsweise kann das portable Teil als mobile Energiequelle zur Stromversorgung eines Campingwagens dienen. Das portable Teil kann auch als Akkumulator für e-Bikes oder sonstige mit einem Elektromotor versehene Geräte oder Fortbewegungsmittel ausgebildet sein.

In einigen bevorzugten Ausführungsformen zeichnet sich das erfindungsgemäße Gerät durch mindestens eines der drei unmittelbar folgenden zusätzlichen Merkmale a. bis c. aus:
a. Das portable Teil verfügt über ein Leuchtmittel, welches an den Energiespeicher gekoppelt ist.
b. Das Leuchtmittel kann über die Steuerungs- und/oder Überwachungseinrichtung geschaltet werden.
c. Das Leuchtmittel kann über einen separaten Lichtschalter geschaltet werden.

In bevorzugten Ausführungsformen sind die unmittelbar vorstehenden Merkmale a. und b. oder a. und c. in Kombination miteinander realisiert. Besonders bevorzugt können auch alle drei Merkmale a. bis c. in Kombination miteinander realisiert sein.

Das Leuchtmittel kann beispielsweise beim Camping sehr nützlich sein. Es kann in bevorzugten Ausführungsformen über die bereits beschriebene Anzeige- und/oder Bedieneinheit gesteuert werden.

Weitere Vorteile und Aspekte der Erfindung ergeben sich aus den Ansprüchen, der nachfolgenden Beschreibung einer bevorzugten Ausführungsform der Erfindung sowie anhand der Zeichnungen. Hierbei zeigen schematisch
- Figur 1 eine Ausführungsform eines erfindungsgemäßen modularen Geräts mit einem Basisteil und einem daran angekoppelten portablen Teil und
- Figur 2 das in Fig. 1 dargestellte Gerät mit abgekoppeltem portablem Teil.

Elektrische Verbindungen sind in den Figuren lediglich symbolisch dargestellt. Jede der dargestellten Verbindungen umfasst in der Praxis die jeweils erforderliche Anzahl von elektrischen Leitern, in der Regel zwei Leiter.

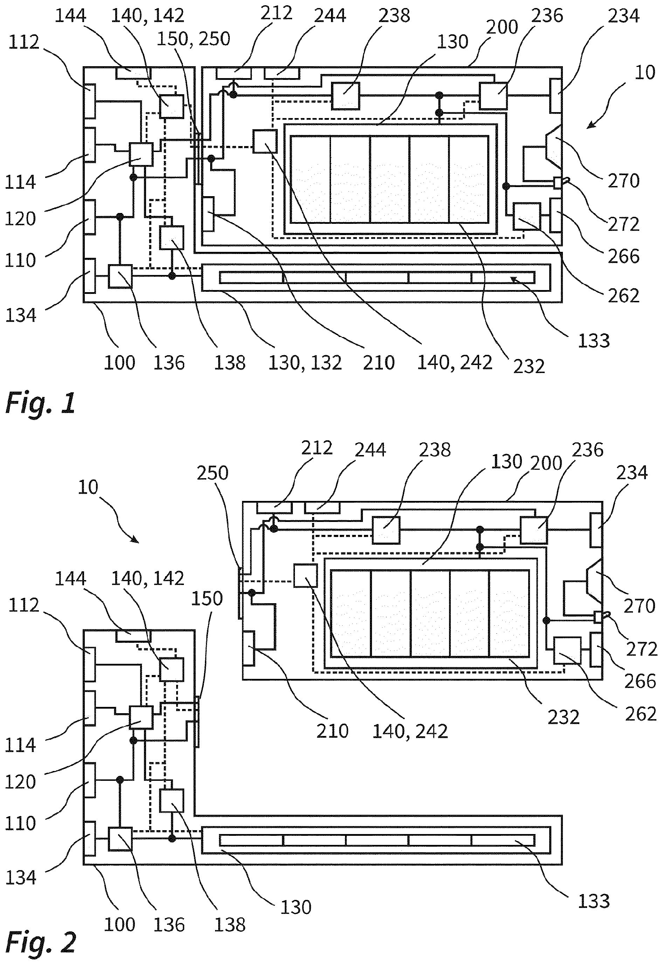

Das Gerät 10 gemäß den Figuren 1 und 2 umfasst ein Basisteil 100 und ein daran ankoppelbares portables Teil 200 auf. In Figur 1 ist das portable Teil 200 in angekoppelten Zustand gezeigt, in Figur 2 im abgekoppelten Zustand.

Das Basisteil 100 und das portable Teil 200 weisen jeweils einen Kopplungsbereich mit den zueinander komplementär ausgebildeten Kopplungseinrichtungen 150 und 250 auf. Bei Kopplung des portablen Teils 200 mit dem Basisteil 100 stehen die Kopplungseinrichtungen 150 und 250 unmittelbar miteinander in Kontakt. Die Kopplung umfasst sowohl eine mechanische Kopplung als auch eine elektrische Kopplung zwischen dem Basisteil 100 und dem portablen Teil 200.

In aller Regel umfassen die Kopplungseinrichtungen 150 und 250 ein mechanisches Verriegelungsmittel (nicht dargestellt), welches eine versehentliche Abkopplung des portablen Teils 200 vom Basisteil 100 verhindert.

Das Gerät 10 umfasst einen Energiespeicher 130. Dieser setzt sich zusammen aus fünf Energiespeicherelementen im portablen Teil 200, darunter das Energiespeicherelement 232, sowie weiteren fünf Energiespeicherelementen im Basisteil 100, darunter das Energiespeicherelement 133. Bei den Energiespeicherelementen im Basisteil 100 handelt es sich um wiederaufladbare Blei-Akkumulatorzellen. Bei den Energiespeicherelementen im portablen Teil 200 handelt es sich um wiederaufladbare Lithium-Ionen-Zellen.

Das Gerät 10 verfügt über insgesamt vier Ausgänge, die zur Stromversorgung elektrischer Verbraucher dienen können, nämlich den ersten Ausgang 212, den zweiten Ausgang 112, den dritten Ausgang 114 und den vierten Ausgang 266.

Sowohl das Basisteil 100 als auch das portable Teil 200 verfügen über einen Netzanschluss für eine Wechselspannungsquelle, es handelt sich hierbei um die Anschlüsse 110 und 210. Über diese Anschlüsse kann Wechselspannung in das Gerät eingespeist werden. Die Anschlüsse 110 und 210 sind jeweils über einen Laderegler, die Laderegler 136 und 236, mit dem Energiespeicher 130 bzw. den im Basisteil 100 und dem portablen Teil 200 jeweils angeordneten Energiespeicherelementen gekoppelt. Der Energiespeicher 130 kann also über die Anschlüsse 110 und 210 geladen werden.

Weiterhin umfasst das Gerät 10 sowohl am Basisteil 100 als auch am portablen Teil 200 einen Ladeanschluss 134, 234 für eine zusätzliche Gleich- oder Wechselspannungsquelle, insbesondere für Spannung aus einer Photovoltaik- oder Windkraftanlage. Der Energiespeicher 130 kann auch über diese Anschlüsse geladen werden. Das Laden der im Basisteil 100 angeordneten Energiespeicherelemente erfolgt dabei über den Laderegler 136, wobei dieser derart konfiguriert ist, dass er im gekoppelten Zustand neben den Energiespeicherelemente im Basisteil 100 gleichzeitig auch die Energiespeicherelemente im portablen Teil 200 laden kann. Das Laden der im portablen Teil 200 angeordneten Energiespeicherelemente mit Spannung aus dem Netzanschluss 210 oder dem Ladeanschluss 234 kann über den Laderegler 236 erfolgen. In abgekoppeltem Zustand ist dies auch nicht anders möglich.

Das portable Teil 200 umfasst den ersten Ausgang 212 und den vierten Ausgang 266, die vom Energiespeicher 130 mit einer elektrischen Spannung versorgt werden können. Das Basisteil 100 umfasst den zweiten Ausgang 112 und den dritten Ausgang 114.

Der erste Ausgang 212 ist für Wechselstromverbraucher vorgesehen, Zu diesem Zweck umfasst das portable Teil 200 einen Wechselrichter 238, der zwischen dem ersten Ausgang 212 und dem Energiespeicher 130 bzw. den fünf im portablen Teil 200 befindlichen Energiespeicherelementen des Energiespeichers 130 angeordnet ist. Beim vierten Ausgang 266 handelt es sich um einen USB-Ladeanschluss, er dient also für Gleichstromverbraucher. Alternativ könnte der Ausgang 266 auch ein ein Zigarettenanzünder-Anschluss sein oder sonst irgendein 12V-Anschluss mit Adapter o.Ä. Zwischen dem vierten Ausgang 266 und dem Energiespeicher 130 ist ein Gleichspannungswandler 262 angeordnet, der eine vom Energiespeicher 130 gelieferte Gleichspannung an einen geforderten Wert, hier zum Beispiel 5 V, anpasst.

Das Gerät 10 verfügt über eine Schalteinrichtung 120, mittels der der Netzanschluss 110 elektrisch mit dem zweiten Ausgang 112 verbunden und von diesem getrennt werden kann. Die Schalteinrichtung 120 ist im Basisteil 100 angeordnet. Der zweite Ausgang 112 kann also über die Schalteinrichtung 120 als Wechselspannungsausgang geschaltet werden.

Bei angekoppeltem portablem Teil 200 sind die im portablen Teil 200 angeordneten Energiespeicherelemente des Energiespeichers 130 über die Kopplungseinrichtungen 150 und 250 elektrisch mit der Schalteinrichtung 120 verbunden. Die im portablen Teil 200 angeordneten Energiespeicherelemente des Energiespeichers 130 können also auch zur Versorgung elektrischer Ausgänge im Basisteil 100 dienen, etwa des dritten Ausgangs 114 oder des zweiten Ausgangs 112. Gleichzeitig können auch die im Basisteil 100 angeordneten Energiespeicherelemente des Energiespeichers 130 über die Schalteinrichtung 120 mit den Ausgängen 112 und 114 verbunden werden. Das Basisteil 100 umfasst einen Wechselrichter 138, um die von den im Basisteil 100 angeordneten Energiespeicherelementen des Energiespeichers 130 gelieferte Gleichspannung in Wechselspannung umwandeln zu können.

Die Schalteinrichtung 120 ist weiterhin dazu ausgebildet, die im Basisteil 100 und die im portablen Teil 200 angeordneten Energiespeicherelemente parallel und/oder seriell miteinander zu verschalten. Dadurch können die Energiespeicherelemente alle gleichzeitig geladen und entladen werden. Insbesondere können so auch die im portablen Teil 200 angeordneten Energiespeicherelemente beispielsweise über den Netzanschluss 110 geladen werden. Die Schalteinrichtung 120 ist weiterhin derart ausgebildet, dass der dritte Ausgang 114 separat von dem zweiten Ausgang 112 an- und/oder ausschaltbar ist.

Bei einer parallelen und/oder seriellen Verschaltung der im Basisteil 100 und die im portablen Teil 200 angeordneten Energiespeicherelemente, kann ein Ladungsausgleich zwischen den im Basisteil 100 und den im portablen Teil 200 angeordneten Energiespeicherelementen erforderlich sein. Ein derartiger Ladungsausgleich kann zu einem kurzeitigen Ausgleichstrom von mehreren Ampere führen. Um derartige Ausgleichströme zu verhindern können beispielsweise Trenndioden zischen den im Basisteil 100 und den im portablen Teil 200 angeordneten Energiespeicherelementen angeordnet sein. Weiterhin sind auch Ausgestaltungen möglich, bei denen das Gerät einen Ausgleichsregler (eine elektronische Schaltung, die üblicherweise Teil eines Batteriemanagementsystems ist, welche eine gleichmäßige elektrische Ladungsverteilung ähnlich aufgebauter, aber durch Fertigungstoleranzen und Alterung in elektrischer Hinsicht leicht unterschiedlichen Energiespeicherelementen innerhalb eines Energiespeichers gewährleistet) umfasst. Dieser Ausgleichsregler kann sowohl passiv als auch aktiv verschiedene Ladezustände der Energiespeicherelemente erhalten oder ausgleichen.

Das Gerät verfügt neben der Schalteinrichtung 120 auch über eine Steuerungs- und/oder Überwachungseinrichtung 140. Diese umfasst eine Steuerungs- und/oder Überwachungseinheit 142 im Basisteil 100 und eine Steuerungs- und/oder Überwachungseinheit 242 im portablen Teil 200. Die Steuerungs- und/oder Überwachungseinheit 142 ist derart ausgelegt, dass sie die aktuelle Spannung und den Ladezustand der im Basisteil 100 angeordneten Energiespeicherelemente erfassen kann. Sie kann weiterhin auch den Status des Netzanschlusses 110 erfassen. Die Steuerungs- und/oder Überwachungseinheit 242 ist derart ausgelegt, dass sie die aktuelle Spannung und den Ladezustand der im portablen Teil 200 angeordneten Energiespeicherelemente erfassen kann. Sie kann weiterhin auch den Status des Netzanschlusses 210 erfassen.

Die Steuerungs- und/oder Überwachungseinrichtung 140 ist außerdem dazu ausgelegt, die Schalteinrichtung 120 oder einzelne Schaltelemente der Schalteinrichtung in unterschiedliche Schaltzustände zu überführen bzw. entsprechende Schaltsignale zu geben.

Die Steuerungs- und/oder Überwachungseinrichtung 140 umfasst eine Datenübertragungseinheit, die dazu ausgebildet ist, Schaltsignale kabellos von einem nicht gezeigten externen Sender zu empfangen und/oder kabellos an einen nicht gezeigten externen Empfänger zu übertragen. Außerdem ist die Datenübertragungseinheit dazu ausgebildet, Daten über Schaltzustände und Leistungswerte des Energiespeichers 130 und Leistungswerte von anschließbaren externen elektrischen Verbrauchern an den nicht gezeigten externen Empfänger weiterzuleiten.

Die Steuerungs- und/oder Überwachungseinrichtung 140 ist derart ausgebildet, dass sie im Falle einer Abweichung eines Leistungswerts an dem Netzanschluss 110, also beispielsweise einer Störung im Stromnetz, die Schalteinrichtung 120 oder einzelne Schaltelemente derselben derart ansteuern kann, dass an den zweiten Ausgang 112 angeschlossene elektronische Verbraucher mit Energie aus dem Energiespeicher 130 versorgt werden.

Die Steuerungs- und/oder Überwachungseinrichtung 140 erfasst außerdem, ob eine elektrische und mechanische Kopplung zwischen dem Basisteil 100 und dem portablen Teil 200 besteht. Hierzu kann die Steuerungs- und/oder Überwachungseinrichtung 140 beispielsweise einen Spannungsabfall messen, der bei der Abkopplung des portablen Teils 200 aus der elektrischen Abtrennung der im portablen Teil 200 angeordneten Energiespeicherelemente resultiert.

Das Basisteil 100 und das portable Teil 200 umfassen jeweils eine Anzeige- und Bedieneinheit 144, 244. Diese Anzeige- und Bedieneinheiten 144, 244 sind als TFT-Displays ausgebildet und geben Aufschluss über aktuelle Betriebszustände. Sie sind über eine berührungsempfindliche Oberfläche als Eingabegerät ausgebildet, worüber sich unterschiedliche Zustände der Schalteinrichtung 120 manuell aktivieren und deaktivieren.

Das portable Teil 200 verfügt in diesem Ausführungsbeispiel über ein Leuchtmittel 270, das von den im portablen Teil 200 angeordneten Energiespeicherelementen mit elektrischer Energie gespeist wird. Das Leuchtmittel 270 ist über einen separaten Lichtschalter 272 schaltbar. Weiterhin kann das Leuchtmittel 270 auch über die Steuerungs- und/oder Überwachungseinrichtung 140 geschaltet werden.

## Patentansprüche

1. Modulares Gerät zur Stromversorgung mit den folgenden Merkmalen:
a. das Gerät (10) verfügt über einen wiederaufladbaren Energiespeicher (130) mit mindestens einem Energiespeicherelement (132, 232), und
b. das Gerät (10) verfügt über einen Netzanschluss (110) für eine Wechselspannungsquelle, und
c. das Gerät (10) verfügt über einen ersten Ausgang (212) und einen zweiten Ausgang (112), an die jeweils externe elektrische Verbraucher anschließbar sind, und
d. das Gerät (10) verfügt über eine Schalteinrichtung (120), mittels der
- der Netzanschluss (110) elektrisch mit dem zweiten Ausgang (112) verbunden und von diesem getrennt werden kann, und
- der Energiespeicher (130) oder ein erstes Energiespeicherelement (232) des Energiespeichers (130) elektrisch mit dem zweiten Ausgang (112) verbunden und von diesem getrennt werden kann
wobei
e. das Gerät (10) ein Basisteil (100) und ein daran koppelbares portables, vom Basisteil (100) abnehmbares Teil (200) umfasst, und
f. das portable Teil (200) den Energiespeicher (130) oder das erste Energiespeicherelement (232) des Energiespeichers (130) sowie den ersten Ausgang (212) umfasst, wobei das portable Teil (200) dazu ausgebildet ist, dass der Energiespeicher (130) oder das erste Energiespeicherelement (232) den ersten Ausgang (212) mit einer elektrischen Spannung versorgen kann, und
g. das Basisteil (100) den Netzanschluss (110), die Schalteinrichtung (120) oder einen Teil derselben und den zweiten Ausgang (112) umfasst, und
h. der Energiespeicher (130) oder das erste Energiespeicherelement (232) des Energiespeichers (130) bei angekoppeltem portablem Teil (200) elektrisch mit der Schalteinrichtung (120) verbunden ist.

2. Gerät (10) nach Anspruch 1 mit mindestens einem der folgenden Merkmale:
a. Das Basisteil (100) umfasst ein zweites Energiespeicherelement (132) des Energiespeichers (130).
b. Das Basisteil (100) ist derart ausgebildet, dass das zweite Energiespeicherelement (132) den zweiten Ausgang (112) und/oder einen dritten Ausgang (114) im Basisteil (100) mit einer elektrischen Spannung versorgen kann.
c. Die Schalteinrichtung (120) ist dazu ausgebildet, eine elektrische Verbindung zwischen dem zweiten Energiespeicherelement (232) und dem zweiten Ausgang (112) herzustellen oder zu trennen.
d. Der Netzanschluss (110) ist mit dem zweiten Energiespeicherelement (132) elektrisch verbunden, so dass dieses von der Wechselspannungsquelle geladen werden kann.

3. Gerät (10) nach einem der vorstehenden Ansprüche mit mindestens einem der folgenden Merkmale:
a. Das Gerät (10) umfasst einen Ladeanschluss (134, 234) für eine zusätzliche externe Spannungsquelle.
b. Das Basisteil (100) umfasst den Ladeanschluss (134).
c. Der Ladeanschluss (134) ist mit dem zweiten Energiespeicherelement (132) elektrisch verbunden, so dass dieses von der zusätzlichen externen Spannungsquelle geladen werden kann.
d. Das portable Teil (200) umfasst den Ladeanschluss (234).
e. Der Ladeanschluss (234) ist mit dem ersten Energiespeicherelement (232) elektrisch verbunden, so dass dieses von der zusätzlichen externen Spannungsquelle geladen werden kann.

4. Gerät (10) nach einem der vorstehenden Ansprüche mit mindestens einem der folgenden Merkmale:
a. Das erste Energiespeicherelement (232) umfasst als sekundäre Zelle mindestens eine Ackumulatorzelle (233) vom Typ Lithium-Ionen-Akkumulator.
b. Das zweite Energiespeicherelement (132) umfasst als sekundäre Zelle mindestens eine Ackumulatorzelle (133) vom Typ Blei-Akkumulator.
c. Das erste Energiespeicherelement (232) umfasst als sekundäre Zelle mindestens eine Ackumulatorzelle (233) vom Typ Lithium-Ionen-Akkumulator und das zweite Energiespeicherelement (132) umfasst als sekundäre Zelle mindestens eine Akkumulatorzelle (133) vom Typ Blei-Akkumulator.

5. Gerät (10) nach einem der vorstehenden Ansprüche mit mindestens einem der folgenden Merkmale:
a. Das Gerät (10) ist derart ausgebildet, dass das erste und das zweite Energiespeicherelement (232, 132) gleichzeitig von der Wechselspannungsquelle geladen werden.
b. Das Gerät (10) ist derart ausgebildet, dass das erste und das zweite Energiespeicherelement (232, 132) gleichzeitig von der zusätzlichen externen Spannungsquelle geladen werden können.
c. Das Gerät (10) ist derart ausgebildet, dass das erste und das zweite Energiespeicherelement (232,132) gleichzeitig entladen werden können.

6. Gerät (10) nach einem der vorstehenden Ansprüche mit mindestens einem der folgenden Merkmale:
a. Das Gerät (10) umfasst eine Steuerungs- und/oder Überwachungseinrichtung (140).
b. Die Steuerungs- und/oder Überwachungseinrichtung (140) ist dazu ausgelegt mindestens einen Leistungswert des Netzanschlusses (110) zu erfassen.
c. Die Steuerungs- und/oder Überwachungseinrichtung (140) ist dazu ausgelegt, einen Ladezustand und/oder Leistungswert des Energiespeichers (130) und/oder einzelner Energiespeicherelemente (232, 132) zu erfassen.
d. Die Steuerungs- und/oder Überwachungseinrichtung (140) ist mit der Schalteinrichtung (120) verbunden und dazu ausgelegt, die Schalteinrichtung (120) oder einzelne Schaltelemente der Schalteinrichtung (120) in unterschiedliche Schaltzustände zu überführen.
e. Die Steuerungs- und/oder Überwachungseinrichtung (140) ist dazu ausgelegt, zu erfassen, ob eine elektrische und/oder mechanische Kopplung zwischen dem Basisteil (100) und dem portablen Teil (200) besteht.

7. Gerät (10) nach einem der vorstehenden Ansprüche mit mindestens einem der folgenden Merkmale:
a. Das Basisteil (100) verfügt über eine Anzeige- und/oder Bedieneinheit (144).
b. Das portable Teil (200) verfügt über eine Anzeige- und/oder Bedieneinheit (244).

8. Gerät (10) nach einem der vorstehenden Ansprüche mit mindestens einem der folgenden Merkmale:
a. Das Gerät (10) umfasst eine Datenübertragungseinheit, die mit der Steuerungs- und/oder Überwachungseinrichtung (140) verbunden ist.
b. Das Gerät (10) umfasst einen Dateneingang, der für eine nicht kabellose Übertragung von Daten und/oder Schaltsignalen von und/oder zu der Datenübertragungseinheit vorgesehen ist.
c. Die Datenübertragungseinheit ist dazu ausgebildet, Daten und/oder Schaltsignale kabellos von einem externen Sender zu empfangen und/oder kabellos an einen externen Empfänger zu übertragen.
d. Die Datenübertragungseinheit ist dazu ausgebildet, die von dem externen Sender empfangenen Daten und/oder Schaltsignale an die Steuerungs- und/oder Überwachungseinrichtung (140) weiterzuleiten.
e. Die Datenübertragungseinheit ist dazu ausgebildet, Daten über Schaltzustände und/oder Leistungswerte des Energiespeichers (130) und/oder Leistungswerte des mindestens einen externen elektrischen Verbrauchers an den externen Empfänger weiterzuleiten.

9. Gerät (10) nach einem der vorstehenden Ansprüche mit mindestens einem der folgenden Merkmale:
a. Das Gerät (10) umfasst ein Detektionsmittel, um ein mechanisches An- und/oder Abkoppeln des portablen Teils (200) zu erfassen und an die Steuerungs- und/oder Überwachungseinrichtung (140) zu melden.
b. Das Gerät (10) umfasst ein mechanisches Verriegelungsmittel zum Befestigen des portablen Teils (200) an dem Basisteil (100).

10. Gerät (10) nach einem der vorstehenden Ansprüche mit mindestens einem der folgenden Merkmale:
a. Mindestens ein Ausgang (112, 114, 212) des Geräts (10) ist ein Ausgang Wechselspannungsausgang, an den externe Wechselspannungsverbraucher anschließbar sind.
b. Das Gerät (10) umfasst mindestens einen Wechselrichter (138, 238), der zwischen den Energiespeicher (130) und dem Wechselspannungsausgang geschaltet ist.

11. Gerät (10) nach einem der vorstehenden Ansprüche mit mindestens einem der folgenden Merkmale:
a. Mindestens ein Ausgang (266) des Geräts (10) ist ein Gleichspannungsausgang, an die externe Gleichspannungsverbraucher anschließbar sind.
b. Das Gerät (10) verfügt über einen Gleichspannungswandler (262), der zwischen das Energiespeicher (130) und dem Gleichspannungsausgang geschaltet ist.
c. Das portable Teil (200) umfasst den Gleichspannungsausgang.

12. Gerät (10) nach einem der vorstehenden Ansprüche mit mindestens einem der folgenden Merkmale:
a. Das portable Teil (200) verfügt über ein Leuchtmittel (270), welches an den Energiespeicher (130) gekoppelt ist.
b. Das Leuchtmittel (270) kann über die Steuerungs- und/oder Überwachungseinrichtung (140) geschaltet werden.
c. Das Leuchtmittel (270) kann über einen separaten Lichtschalter (272) geschaltet werden.
